**Europäisches Patentamt**

**European Patent Office**

**Office européen des brevets**

(19)

(11) Veröffentlichungsnummer : **0 365 802 B1**

(12)

# EUROPÄISCHE PATENTSCHRIFT

(45) Veröffentlichungstag der Patentschrift :
**22.07.92 Patentblatt 92/30**

(51) Int. Cl.$^5$ : **B01J 3/00, G02B 7/00**

(21) Anmeldenummer : **89116505.2**

(22) Anmeldetag : **07.09.89**

(54) **Vorrichtung zum Beobachten gasdicht und druckfest abgeschlossener Räume.**

(30) Priorität : **27.10.88 DE 8813504 U**

(43) Veröffentlichungstag der Anmeldung :
**02.05.90 Patentblatt 90/18**

(45) Bekanntmachung des Hinweises auf die
Patenterteilung :
**22.07.92 Patentblatt 92/30**

(84) Benannte Vertragsstaaten :
**AT BE CH DE ES FR GB IT LI LU NL SE**

(56) Entgegenhaltungen :
**DE-U- 8 217 420**
**FR-A- 2 619 186**

(73) Patentinhaber : **HERBERTS INDUSTRIEGLAS
GMBH + CO.KG
Gewerbeschulstrasse 72
W-5600 Wuppertal 2 (DE)**

(72) Erfinder : **Herberts, Kurt-Dieter
Gewerbeschulstrasse 72
W-5600 Wuppertal 2 (DE)**

(74) Vertreter : **Türk, Gille, Hrabal
Brucknerstrasse 20
W-4000 Düsseldorf 13 (DE)**

**Beschreibung**

Die Erfindung betrifft eine Vorrichtung zum Beobachten gasdicht und druckfest abgeschlossener Räume von außen, welche einen aus Metall bestehenden zylindrischen Rahmen und einen in dem Rahmen angeordneten durchsichtigen Einsatz aufweist.

Bei einer bekannten Vorrichtung dieser Gattung zum Beobachten von gekapselten elektrischen Schaltern ist der zylindrische Rahmen als in ein Gewindeloch einschraubbarer Einsatz ausgebildet (DE-GM 82 17 420.2). Daher erfordert diese bekannte Vorrichtung besondere Vorkehrungen, um sie ein- und ausbauen zu können. Der Einsatz kann aus Glas bestehen, welches an einem Ende in den Rahmen eingeschmolzen ist.

Für Anwendungen, bei denen hohe Druckdifferenzen zwischen Innen- und Außenseite zu überbrücken sind, ist diese bekannte Vorrichtung nicht geeignet. Der Rahmen hat, da er aus normalem Edelstahl besteht, ein verhältnismäßig hohes Wärmeschrumpf- und Wärmedehnungsverhalten, was dazu führt, daß der beispielsweise aus Natronsilikat-Glas bestehende durchsichtige Einsatz, der selbst ein sehr viel geringeres Wärmeschrumpfund Wärmedehnungsverhalten aufweist, bei hohen Temperaturen und starken Druckdifferenzen bersten kann.

aus dem Dokument FR-A-2619186 ist bekannt daß der Ralimen aus einer Speziallierung bestehen soll, die ein ähnliches Wärmedchnungsverhalten aufweist wie das eingesetzte glas.

Andererseits ist es beispielsweise bei Reaktoren bekannt, vor Beobachtungsöffnungen Schauglas-Platten zu befestigen, die zwischen einer am Reaktorgehäuse vorgesehenen, die Beobachtungsöffnung umgebenden Fassung und einem aufsetzbaren und festschraubbaren Klemmring auswechselbar angebracht werden. Diese bekannten Schauglas-Platten bestehen durchgehend aus Glas wie Natronsilikat-Glas, das von chemischen Substanzen wie Natronlauge und auch von Säuren leicht angegriffen wird. Um unter Einflüssen hoher Drücke wie 10 bar und höher nicht unzulässig stark durchgebogen oder ausgebeult zu werden, werden diese Schauglas-Platten vor Verwendung oberflächlich derart behandelt, daß eine die zu erwartende Durchbiegung kompensierende Vorspannung in der Glasoberfläche vorhanden ist. Derartige Schauglas-Platten sind daher sehr empfindlich gegen mechanische äußere Einwirkungen und können durch Aufschlagen von oder auf harten Gegenständen leicht an der Oberfläche abplatzen. Auch im Randbereich, wo derartige Schauglas-Platten eingespannt werden, können solche Oberflächenschäden durch den Klemmdruck hervorgerufen werden.

Der Erfindung liegt die Aufgabe zugrunde, eine Vorrichtung zum Beobachten gasdicht und druckfest abgeschlossener Räume von außen zu schaffen, die auch unter hohen Druck- und Wärmeeinflüssen sowie unter Einflüssen chemischer Substanzen äußerst beständig ist und gegen die beispielsweise an Reaktoren bisher verwendeten Schauglas-Platten problemlos ausgetauscht werden kann.

Diese Aufgabe wird mit einer Vorrichtung der eingangs genannten Gattung, welche die Merkmale des kennzeichnenden Teiles des Schutzanspruches 1 aufweist, gelöst. Vorteilhafte Ausgestaltungen der Erfindung sind Gegenstand der Unteransprüche.

Durch die Erfindung wird eine Vorrichtung zum Beobachten gasdicht und druckfest abgeschlossener Räume von außen geschaffen, bei der der ringscheibenförmig ausgebildete und aus Edelstahl bestehende Rahmen ein ähnliches Wärmeschrumpf- und Wärmedehnungsverhalten wie das eingeschmolzene Glas aufweist, so daß ein Glas wie Borosilikat-Glas verwendet werden kann, das sowohl eine hohe Beständigkeit gegen einwirkende chemische Substanzen wie Natronlauge, also eine hohe Alkalibeständigkeit, ferner Säurebeständigkeit und auch Beständigkeit gegen einwirkenden Wasserdampf aufweist. Wegen der nicht allzu großen Unterschiede im Wärmeschrumpf- und Wärmedehnungsverhalten des Edelstahles und des Glases ist ein sicherer Verbund zwischen dem Edelstahl-Rahmen und dem Glas-Einsatz auch bei extremen Betriebstemperaturen und Betriebsdrücken gewährleistet.

Vorzugsweise wird für den Rahmen Edelstahl der Qualität 1.4462 eingesetzt, der ein deutlich niedrigeres thermisches Ausdehnungsverhalten als üblicher Edelstahl aufweist. Während bei üblichem Edelstahl das Ausdehnungsverhalten $19 \times 10^{-7}$ mm/mm °C beträgt, liegt das dasselbe bei Edelstahl der Qualität 1.4462 bei $11 \times 10^{-7}$ mm/mm °C. Auch Edelstahl der Qualität 1.4460 ist für die erfindungsgemäße Vorrichtung geeignet.

Das gemäß der Erfindung eingesetzte Borsilikat-Glas hat ein thermisches Ausdehnungsverhalten von etwa $5 \times 10^{-7}$ mm/mm °C, das zwar geringer als das des für den Rahmen eingesetzten speziellen Edelstahles ist, jedoch sind die Unterschiede zwischen dem Ausdehnungsverhalten des für den Rahmen eingesetzten Edelstahles und des für den Einsatz verwendeten Glases nicht so groß, daß bei starken Temperaturschwankungen bzw. starkem Temperaturanstieg im praktischen Betrieb Risse im Glas-Einsatz auftreten würden.

Der Zusammenbau zwischen dem aus Edelstahl bestehenden Rahmen und dem aus Glas bestehenden Einsatz erfolgt bei einer Temperatur von etwa 1000 bis 1200 °C. Das in den vorgefertigten ringförmigen Rahmen in schüttfähigem Zustand eingegebene Glas ist bei solchen Temperaturen geschmolzen, so daß ein intensiver Verbund zwischen Glas und Edelstahl hergestellt wird. Nach dem Abkühlen dieses Verbundes wird die scheibenförmig ausgebildete Vorrichtung überschliffen und anschließend durch Läppen mit Ceroxyd oberflächlich poliert, so daß eine kreisförmige Scheibe mit ununterbrochenen glatten Oberflächen entsteht.

Der Zusammenbau erfolgt auf diese Weise derart, daß der von dem aus Edelstahl bestehenden ringförmigen Rahmen auf den aus Glas bestehenden Einsatz ausgeübte Druck Zugkräfte im Glas kompensiert, die auf äußere Druckeinwirkungen im Betrieb zurückzuführen sind, wenn die erfindungsgemäße Vorrichtung beispielsweise an eine Schau- oder Sichtöffnung eines unter erhöhtem Druck stehenden Reaktors angebaut ist.

Gemäß der vorliegenden Erfindung wird also sozusagen eine "mechanische" Vorspannung zwischen den beiden Komponenten der Vorrichtung erzeugt, während bei vorbekannten Vorrichtungen dieser Art die den Rahmen mit dem Einsatz zusammenhaltende Vorspannung thermischer Art ist, so daß Beschädigungen in der geschrumpften Oberfläche des Glas-Einsatzes zum Bruch des Glases führen können. Bei der vorliegenden Erfindung ergibt sich dieses Problem nicht, weil das Glas des Einsatzes der Vorrichtung nicht an seiner Oberfläche geschrumpft wird.

Es hat sich gezeigt, daß der Verbund zwischen dem aus Edelstahl bestehenden Rahmen und dem aus Borosilikatglas bestehenden Einsatz umso fester ist, je zäher und formstabiler das Material des Rahmens ist. Beim Abkühlen der aus zwei Komponenten gebildeten Vorrichtung ist daher eine Temperaturkontrolle vorzuziehen, damit die Werte für Kerbschlag des Stahles erhalten bleiben. Zu diesem Zweck soll der Stahl beim Abkühlen im Temperaturbereich oberhalb 600 °C nicht länger als 20 Minuten gehalten werden.

Gemäß der Erfindung ist die Druckfestigkeit der Schau-Vorrichtung wesentlich verbessert. Daher können die Drücke im Inneren eines mit einer derartigen Schau-Vorrichtung ausgestatteten Reaktors zwischen 10 und 40 bar liegen und sogar noch höher ansteigen, ohne daß sich negative Auswirkungen zeigen würden oder die Vorrichtung gar beschädigt oder zerstört werden könnte.

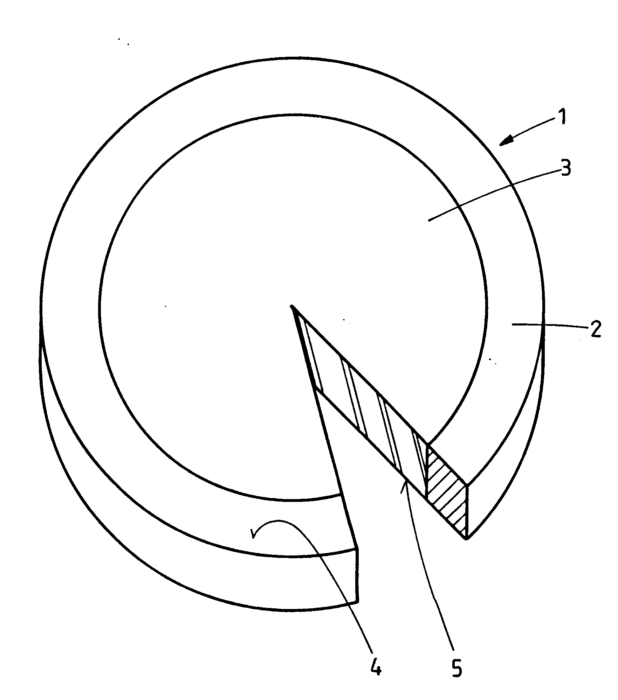

In der Zeichnung ist in einer einzigen Zeichnungsfigur ein Ausführungsbeispiel der erfindungsgemäßen Vorrichtung schaubildlich und teilweise geschnitten dargestellt.

Wie aus der Zeichnung zu erkennen ist, besteht die Vorrichtung aus einer im Grundriß kreisförmigen Scheibe (1), die einen äußeren Ring (2) aus aus speziellem Edelstahl und einen inneren Einsatz (3) aus durchsichtigem Material, nämlich Borosilikat-Glas, aufweist. Der Einsatz (3) ist durch Schmelzen von schüttfähigem Glas im Ring (2) erzeugt worden und daher durch Schmelzintegration mit dem Ring (2) dauerhaft verbunden. Auch bei Einwirkung hoher Drücke auf eine Seite dieser Scheibe (1) löst sich der Einsatz (3) nicht aus dem Ring (2).

Die Oberflächen (4 und 5) der Scheibe (1) sind ohne Unterbrechung durchgehend glattgeschliffen und poliert, so daß die unterschiedlichen Materialien des Ringes (2) und des Einsatzes (3) keine Absätze oder Unterbrechungen der Oberfläche bilden.

Die Vorrichtung ist für die verschiedensten Anlagen wie z.B. Apparate, Behälter, Rohrleitungen und Reaktoren aller Art geeignet.

## Patentansprüche

1. Vorrichtung zum Beobachten gasdicht und druckfest abgeschlossener Räume von Anlagen wie z.B. Apparate, Behälter, Rohrleitungen von außen, mit einem aus Metall bestehenden zylindrisch ausgebohrten oder ausgedrehten Rahmen und mit einem in dem Rahmen angeordneten durchsichtigen Einsatz, **dadurch gekennzeichnet,** daß der Rahmen (2) aus einem ein geringes Wärmeschrumpf- und -dehnungsverhalten aufweisenden Edelstahl und der Einsatz (3) aus Borsilikatglas besteht, welches ein ähnliches oder noch geringeres Wärmeschrumpf- und -dehnungsverhalten aufweist.

2. Vorrichtung nach Anspruch 1, dadurch gekennzeichnet, daß Rahmen (2) und Einsatz (3) zusammen als einen gleichförmigen Querschnitt aufweisende Scheibe (1) mit durchgehenden glatten Oberflächen (4,5) ausgebildet sind.

3. Vorrichtung nach Anspruch 1 oder 2, dadurch gekennzeichnet, daß der Rahmen (2) ringförmig ausgebildet ist und aus Edelstahl der Qualität 1.4460 und/oder 1.4462 besteht.

4. Vorrichtung nach einem der Ansprüche 1 bis 3, dadurch gekennzeichnet, daß der Einsatz (3) durch Schmelzintegration im Rahmen (2) angeordnet und befestigt ist.

## Claims

1. A viewing window assembly for observing the interior of a gas-tight and pressure-tight closed chamber of an installation such as, for example, reactor apparatus, a pressure vessel, or pipework from outside, said assembly comprising a cylindrical frame which is machined out and made of metal, and a transparent insert arranged within said frame, **wherein** the improvement lies in that said frame is made of a stainless steel of low coefficient of thermal expansion and said insert is made of boro-silicate glass, which has got a coefficient of thermal expansion which is not greater than that of said frame.

2. The viewing window assembly set forth in claim 1 wherein said frame and said insert together are formed as a disc having a uniform cross-section and having surfaces which are smooth right across.

3. The viewing window assembly set forth in claim 1 or claim 2 wherein said frame is made of ring shape and comprises stainless steel of quality 1.4460 or 1.4462.

4. The viewing window assembly as set forth in any one of the claims 1 to 3, wherein said insert is arranged and fixed in said frame by melt-integration.

**Revendications**

1. Dispositif d'observation de l'extérieur d'enceintes fermées, étanches au gaz et résistantes à la pression, d'installations, telles qu'appareils, récipients, tuyauteries, comportant un cadre en métal alésé ou tourné cylindriquement ainsi qu'un accessoire transparent placé dans le cadre, **caractérisé en ce que** le cadre (2) est en acier spécial présentant un retrait et une dilatation thermiques réduits et l'accessoire (3) est en verre de boro-silicate qui présente un retrait et une dilatation thermiques similaires ou encore plus réduits.

2. Dispositif selon la revendication 1, caractérisé en ce que le cadre (2) et l'accessoire (3) sont conçrus sous la forme d'un disque (1) présentant une section transversale uniforme, avec des surfaces (4, 5) lisses continues.

3. Dispositif selon la revendication 1 ou 2, caractérisé en ce que le cadre (2) est annulaire et est en acier fin de qualité 1.4460 et/ou 1.4462.

4. Dispositif selon l'une des revendications 1 à 3, caracterisé en ce que l'accessoire (3) est placé et fixé dans le cadre (2), par intégration par fusion.